(19) **Europäisches Patentamt**
**European Patent Office**
**Office européen des brevets**

(11) **EP 2 214 793 B1**

(12) **EUROPEAN PATENT SPECIFICATION**

(45) Date of publication and mention
of the grant of the patent:
**18.01.2012 Bulletin 2012/03**

(51) Int Cl.:
***A63B 37/00*** *(2006.01)* ***C08G 18/48*** *(2006.01)*

(21) Application number: **08855635.2**

(86) International application number:
**PCT/EP2008/065034**

(22) Date of filing: **06.11.2008**

(87) International publication number:
**WO 2009/068421 (04.06.2009 Gazette 2009/23)**

(54) **NOVEL TENNIS BALL**

NEUER TENNISBALL

NOUVELLE BALLE DE TENNIS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.11.2007 EP 07121485**

(43) Date of publication of application:
**11.08.2010 Bulletin 2010/32**

(73) Proprietor: **Huntsman International LLC
Salt Lake City, UT 84108 (US)**

(72) Inventors:
• **VERBEKE, Hugo
B-3000 Leuven (BE)**

• **LIMERKENS, Dominicus
B-3670 Meeuwen-Gruitrode (BE)**

(74) Representative: **Van den Broeck, Kristel Alice et al
Huntsman (Europe) BVBA
Intellectual Property Department
Everslaan 45
3078 Everberg (BE)**

(56) References cited:
**EP-A- 1 125 959          WO-A-00/18817
DE-B1- 2 844 193          GB-A- 910 701**

**Description**

The present invention relates to a novel tennis ball and to a process for making it.

Currently tennis balls can be divided in two types : pressurized ones and pressureless ones. Pressurized balls are preferred since they provide better playing comfort (less vibrations and strain on the human joints). Pressurized balls however lose their pressure and hence their properties over time. Pressureless balls on the other hand hold their properties longer but do not provide the same comfort.

Tennis balls comprise a hollow inner rubber core covered with a textile material, normally a mixture of wool and nylon. The inner core is constructed of two half-shell pieces of formed rubber which are joined together with adhesive to form a single core. Two dumbbell shaped pieces of textile material are attached to the ball core by means of adhesive to give the tennis ball its classic appearance. The thickness and density of the textile material is matched to the court type for which the ball is designed. Pressurized balls are made by filling the core with air or other gas at a pressure above ambient pressure; pressureless balls are made from a harder core. The inner core is generally made of rubber containing additives, for pressurized as well as pressureless balls.

It would be an advantage when the good properties of the pressurized and pressureless balls could be combined.

Surprisingly, we have found a new tennis ball which provides the same comfort as the traditional pressurized ball, which maintains its properties at least as long as the pressureless one, which can be easily made and which can have exactly the same outlook as the traditional ball.

Therefore the present invention relates to a tennis ball which comprises an elastomeric polyurethane foam having a ball shape and a density of 250-800 kg/m$^3$ which foam is covered with a textile material and which foam has been prepared by reacting an aromatic polyisocyanate and a polyol comprising at least 30 % by weight of a polyol having a level of unsaturation of at most 0.03 meq/g and using a blowing agent, wherein the polyol having a level of unsaturation of at most 0.03 meq/g is selected from polyester polyols, polyoxypropylene polyols, polyoxyethylene polyoxypropylene polyols, polyoxyethylene polyols, polyoxybutylene polyols, polyoxyalkylene polyols comprising oxybutylene groups together with oxyethylene and/or oxypropylene groups, polyoxyalkylene polyester polyols and mixtures of such polyols with the proviso that the use of a polyoxyethylene polyoxypropylene polyol having an oxyethylene content of 50-90 % by weight, calculated on the weight of the polyol, as the only polyol having a level of unsaturation of at most 0.03 meq/g is excluded.

The process for making a tennis ball according to the present invention comprises making a ball shaped elastomeric polyurethane foam by putting an aromatic polyisocyanate, a polyol comprising at least 30 % by weight of a polyol having a level of unsaturation of at most 0.03 meq/g and a blowing agent into a ball shaped mould and by allowing these ingredients to form the polyurethane foam, removing the foam from the mould and covering the foam with a textile material, wherein the polyol having a level of unsaturation of at most 0.03 meq/g is selected from polyester polyols, polyoxypropylene polyols, polyoxyethylene polyoxypropylene polyols, polyoxyethylene polyols, polyoxybutylene polyols, polyoxyalkylene polyols comprising oxybutylene groups together with oxyethylene and/or oxypropylene groups, polyoxyalkylene polyester polyols and mixtures of such polyols with the proviso that the use of a polyoxyethylene polyoxypropylene polyol having an oxyethylene content of 50-90 % by weight, calculated on the weight of the polyol, as the only polyol having a level of unsaturation of at most 0.03 meq/g is excluded.

The tennis ball preferably has the following further characteristics :

- weight of the ball: 50-70 and preferably 55-60 g,
- density of the ball: 230-540 kg/m$^3$,
- diameter of the ball: 6-8 cm,
- rebound of the ball (after a free fall of 254 cm) : 110-160 and preferably 120-150 cm,
- compression load deflection of the ball (CLD) of 0.4-0.8 cm (forward) and 0.5-1.2 cm (return). CLD is measured, using the Percey Herbert Stevens equipment as disclosed in GBP 230250 or similar equipment approved by the International Tennis Federation, at 8.2 kg load and over 3 axes with a variation of at most 0.076 cm,
- thickness of the textile material : 0.5-5 mm,
- density of the textile material : 150-250 kg/m$^3$.

Most preferably the tennis ball has all these characteristics in combination.

In order to improve the playing comfort of the balls according to the present invention even further it is advantageous to have a CLD (forward and return) at the higher end of the above range; this is achieved by lowering the hardblock content when making the polyurethane foam.

The International Tennis Federation requires a rebound, a CLD forward and a CLD return, amongst other requirements, within above ranges. Tennis balls according to the present invention may have physical properties within the ranges as required by the ITF.

General procedure for testing :

Before a ball is tested it shall be steadily compressed by approximately one inch (2.54 cm) on each of three diameters at right angles to one another in succession; this process to be carried out three times (nine compressions in all). All tests are to be completed within two hours of precompression. Unless otherwise specified all tests shall be made at a temperature of approximately 68 ° Fahrenheit (20 ° Celsius), a relative humidity of approximately 60% and, unless otherwise specified, an atmospheric pressure of approximately 30 inches Hg (102 kPa). All balls shall be kept at this temperature and this humidity for 24 hours prior to testing and when testing is commenced.

The use of foams in tennis balls has been disclosed in the past; interesting art is US 5413331, US 2005/014854, EP 1148085, KR 2001/002975, EP 10645, GB 2008954, NL 9201353, DE 3131705, GB 2001538, GB 910701, EP 1344555, DE 2911430 and WO 03/41813.

WO 2009/013617 discloses a tennis ball made from a polyisocyanate, a polyol, a chain extender, a catalyst and a blowing agent. Amongst the polyols, polytetramethylene ether glycol, alkylene oxide copolymer of ethylene oxide and tetrahydrofuran and polyethylene glycol have been mentioned. No molecular weight of these polyols has been suggested. WO 2008/000590, published after the priority date of the present application, discloses tennis balls made from a polyoxyethylene polyoxypropylene polyol having an oxyethylene content of 50-90 % by weight.
However the presently claimed tennis balls have not been disclosed.

In the context of the present invention the following terms have the following meaning :

1) isocyanate index or NCO index or index :

the ratio of NCO-groups over isocyanate-reactive hydrogen atoms present in a formulation, given as a percentage :

$$\frac{[NCO] \times 100}{[active\ hydrogen\ ]} \qquad (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual polymerisation process preparing the elastomer involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols) are not taken into account in the calculation of the isocyanate index. Only the free isocyanate groups and the free isocyanate-reactive hydrogens (including those of the water) present at the actual polymerisation stage are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

3) Reaction system : a combination of components wherein the polyisocyanates are kept in one or more containers separate from the isocyanate-reactive components.

4) The expression "elastomeric polyurethane material or foam" as used herein refers to products as obtained by reacting polyisocyanates with isocyanate-reactive hydrogen containing compounds, using foaming agents, and in particular includes cellular products obtained with water as reactive foaming agent (involving a reaction of water with isocyanate groups yielding urea linkages and carbon dioxide and producing polyurea-urethane foams).

5) The term "average nominal hydroxyl functionality" is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

6) The word "average" refers to number average unless indicated otherwise.

7) "Density" is measured according to DIN 53420 and is moulded density unless specified otherwise.

8) Unsaturation in polyols is measured according to ASTM D4671 - 05.

9) "Polyurethane foam having a ball shape" refers to a ball which consists entirely of polyurethane foam, which preferably is one piece of foam.

The elastomeric polyurethane foam is prepared by reacting a polyisocyanate, which preferably is selected from the aromatic polyisocyanates, and the selected polyol(s) and using a blowing agent.

The polyisocyanates preferably are selected from aromatic polyisocyanates like toluene diisocyanate, naphthalenediisocyanate, and preferably diphenylmethane diisocyanate (MDI), mixtures of MDI with homologues thereof having an isocyanate functionality of 3 or more, which mixtures are widely known as crude or polymeric MDI, and isocyanate-terminated variants of these polyisocyanates, such variants containing urethane, uretonimine, carbodiimide, urea, allophanate and/or biuret groups. Mixtures of these polyisocyanates may be used as well.

Most preferably the polyisocyanate is selected from 1) a diphenylmethane diisocyanate comprising at least 40%, preferably at least 60% and most preferably at least 85% by weight of 4,4'-diphenylmethane diisocyanate and the following preferred variants of such diphenylmethane diisocyanate : 2) a carbodiimide and/or uretonimine modified variant of polyisocyanate 1), the variant having an NCO value of 20% by weight or more; 3) a urethane modified variant of polyisocyanate 1), the variant having an NCO value of 20% by weight or more and being the reaction product of an excess of polyisocyanate 1) and of a polyol having an average nominal hydroxyl functionality of 2-4 and an average molecular weight of less than 1000; 4) a prepolymer having an NCO value of 10% by weight or more and preferably of 15 % by weight or more and which is the reaction product of an excess of any of the aforementioned polyisocyanates 1-3) and of a polyol having an average nominal functionality of 2-6, an average molecular weight of 1000-12000 and preferably an hydroxyl value of 15 to 60 mg KOH/g, and 5) mixtures of any of the aforementioned polyisocyanates.

Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI. It is to be noted that the amount of 2,2'-MDI in the isomeric mixtures is rather at an impurity level and in general will not exceed 2% by weight, the remainder being 2,4'-MDI and 4,4'-MDI. Polyisocyanates as these are known in the art and commercially available; for example SUPRASEC$^R$ MPR ex Huntsman.

The carbodiimide and/or uretonimine modified variants of the above polyisocyanate 1) are also known in the art and commercially available; e.g. SUPRASEC 2020, ex Huntsman Polyurethanes.

Urethane modified variants of the above polyisocyanate 1) are also known in the art, see e.g. The ICI Polyurethanes Book by G. Woods 1990, 2nd edition, pages 32-35. Aforementioned prepolymers of polyisocyanate 1) having an NCO value of 10 % by weight or more are also known in the art. Preferably the polyol used for making these prepolymers is selected from polyester polyols and polyether polyols.

Mixtures of the aforementioned polyisocyanates may be used as well, see e.g. The ICI Polyurethanes Book by G. Woods 1990, 2nd edition, pages 32-35. An example of such a commercially available polyisocyanate is Suprasec 2021 ex Huntsman Polyurethanes.

The polyols used are polyols comprising at least 30 % by weight and preferably at least 40 % by weight (all calculated on the weight of the polyol) of the selected polyol(s) having a level of unsaturation of at most 0.03 meq/g; preferably this level is at most 0.01 meq/g. The remaining at most 70 % by weight and preferably at most 60 % by weight of the polyol may be selected from other polyols like from polyols having a level of unsaturation which is higher than 0.03 meq/g. The polyols (those having a low level of unsaturation as well as those having a high level of unsaturation) preferably have an average nominal functionality of 2-4 and an average molecular weight of 1000-8000 and preferably of 1000-7000.

The selected polyols having a level of unsaturation of at most 0.03 meq/g are all known as such.

The selected polyester polyols may be selected from polycaprolactones, polycarbonate polyols and preferably condensation products of polycarboxylic and preferably dicarboxylic acids like adipic acid, glutaric acid, succinic acid and mixtures thereof and their anhydrides and mixtures thereof and glycols like ethylene glycol, diethylene glycol, propylene glycol, dipropylene glycol, 1,4-butanediol and 1,6-hexanediol and mixtures thereof, optionally with crosslinkers like glycerol, trimethylolpropane and pentaerythritol and mixtures thereof. Such polyesters are widely known in the art. DALTOREZ$^R$ P708 is a suitable polyester polyol from Huntsman.

Polyoxypropylene polyols and polyoxyethylene polyoxypropylene polyols having such a low unsaturation are known as well. They may be produced by propoxylating an initiator using a catalyst like CsOH or a so-called double-metal-cyanide catalyst and in the latter case by ethoxylation along the propoxylation. Such polyols are being sold by Bayer as Acclaim™ polyols.

Polyoxyethylene polyols are also widely known. Examples are polyethylene glycols having a molecular weight of 1000 to 8000.

Polyoxybutylene polyols and polyoxyalkylene polyols comprising oxybutylene groups together with oxyethylene and/or oxypropylene groups are also known. A commercially available example of a polyoxybutylene polyol is POLYMEG ex Lyondell.

Polyoxyalkylene polyester polyols are also commercially available. An example is CAPA 7201A from Solvay.

The more preferred polyols having a level of unsaturation of at most 0.03 meq/g are polyester polyols, polyoxybutylene polyols and polyoxyalkylene polyester polyols and mixtures of these polyols and mixtures of the aforementioned polyols with polyoxyethylene polyoxypropylene polyols having an oxyethylene content of 50-90 % by weight, calculated on the weight of the polyol, in a weight ratio of the aforementioned polyols:this polyoxyethylene polyoxypropylene polyol of 1:99 to 99:1 and preferably of 10:90 to 90:10; these polyols when having a level of unsaturation of at most 0.01 meq/g, an average nominal functionality of 2-4 and an average molecular weight of 1000-7000 are most preferred.

Polyols having a level of unsaturation which is more than 0.03 meq/g are widely known as such. Examples are DALTOCEL[R] F428 and F435 ex Huntsman.

DALTOCEL, DALTOREZ and SUPRASEC are trademarks of Huntsman Corporation or an Affiliate thereof which have been registered in at least one but not all countries.

A tennis ball according to the invention is a tennis ball which comprises an elastomeric polyurethane foam having a ball shape and a density of 250-800 kg/m$^3$, which foam is covered with a textile material, the foam having been prepared by reacting an aromatic polyisocyanate and a polyol comprising at least 30 % by weight (on the weight of the polyol) of a polyol having a level of unsaturation of at most 0.03 meq/g wherein this polyol having a level of unsaturation of at most 0.03 meq/g is selected from polyester polyols, polyoxypropylene polyols, polyoxyethylene polyoxypropylene polyols, polyoxyethylene polyols, polyoxybutylene polyols, polyoxyalkylene polyols comprising oxybutylene groups together with oxyethylene and/or oxypropylene groups, polyoxyalkylene polyester polyols and mixtures of such polyols with the proviso that the use of a polyoxyethylene polyoxypropylene polyol having an oxyethylene content of 50-90 % by weight, calculated on the weight of the polyol, as the only polyol having a level of unsaturation of at most 0.03 meq/g is excluded, and using a blowing agent.

In making the elastomeric foam a blowing agent is to be used. The blowing agent should be used in such an amount that a density of 250-800 kg/m$^3$ is obtained. This amount may vary depending upon the type of blowing agent used. Those skilled in the art will be able to determine the amount in the light of the present description and the blowing agent chosen. Blowing agents may be chosen from physical blowing agents, like CFC's and HCFC's and chemical blowing agents like diazodicarbonamide and water. Mixtures of blowing agents may be used as well. Water is most preferred and preferably is used in an amount of 0.1-1.0 % by weight calculated on the amount of polyol.

In preparing the elastomeric polyurethane foam preferably an isocyanate-reactive chain extender and a catalyst are used.

The isocyanate-reactive chain extenders may be selected from amines, amino-alcohols and polyols; preferably polyols are used. Further the chain extenders may be aromatic, cycloaliphatic, araliphatic and aliphatic; preferably aliphatic ones are used. The chain extenders have a molecular weight of less than 1000 and preferably of 62-800. Most preferred are aliphatic diols having a molecular weight of 62-800, such as ethylene glycol, 1,3-propanediol, 2-methyl-1,3-propanediol, 1,4-butanediol, 1,5-pentanediol, 1,6-hexanediol, 1,2-propanediol, 1,3-butanediol, 2,3-butanediol, 1,3-pentanediol, 1,2-hexanediol, 3-methylpentane-1,5-diol, 2,2-dimethyl-1,3-propanediol, diethylene glycol, dipropylene glycol and tripropylene glycol, propoxylated and/or ethoxylated products thereof and mixtures of these chain extenders. The amount of chain extenders, if used, is 1-20 % by weight calculated on the amount of polyol having a molecular weight of 1000 or more.

The catalysts used are catalysts enhancing the formation of urethane bonds like tin catalysts like tin octoate and dibutyltindilaurate, tertiary amine catalysts like triethylenediamine, imidazoles like dimethylimidazole, esters like maleate esters and acetate esters, and alkali metal or alkaline earth metal carboxylate salts like potassium and sodium salts, especially the potassium salts. Examples are potassium acetate, hexanoate, 2-ethylhexanoate and octanoate. If desired mixtures of catalysts may be used. The amount of catalyst will usually be in the range of 0.01 to 5, preferably 0.02-3 parts by weight per 100 parts by weight of reactants.

In addition to the above ingredients, additives and auxiliaries commonly used in making elastomers may be used as optional ingredients; examples are cross-linkers (i.e. isocyanate-reactive compounds having an average nominal functionality of 3-8 and an average molecular weight of less than 1000 and preferably of less than 800), surfactants, fire retardants, smoke suppresessants, UV-stabilizers, colorants, microbial inhibitors, fillers, internal mould release agents and external mould release agents.

The reaction to prepare the foams is conducted at an NCO index of 80-120 and preferably of 90-110 and most preferably of 94-106.

The elastomers may be made according to the one-shot process, the semi-prepolymer process or the prepolymer process.

The moulding process may be conducted according to the reaction injection moulding process, the cast moulding process, rotational moulding and other known moulding processes.

The ingredients may be fed into the mould independently. Alternatively one or more of the ingredients, except the polyisocyanate, are premixed and subsequently fed into the mould. In-line blending and impingement mixing may be used in the preparation process. Once the ingredients have been combined and mixed and fed into the mould they are allowed to react. The temperature of the ingredients and of the mould may vary from ambient temperature to 100 °C. The reaction time may be varied between wide ranges e.g. from 1 minute to 20 hours and preferably from 2 minutes to 10 hours; afterwards the elastomer may be demoulded. Any type of mould may be used like metal moulds, silicon resin moulds and epoxy resin moulds. The over-pack applied in the process may vary from 120 to 500 %; over-pack being defined as the moulded density times 100 %, divided by the free rise density.

After demoulding the elastomer obtained preferably is post-cured. Post-curing may vary between wide ranges like between 1/2 hour and 6 months and at a temperature between room temperature and 100 °C. The higher the temperature the shorter the post-cure time.

Subsequently the elastomer is covered with textile material. Any textile material may be used; it may be woven and/or non-woven; and synthetic and/or not synthetic. Preferably this is the textile material usually employed for making tennis balls e.g. a mixture of wool and synthetic fibre, e.g. nylon. Useful textile materials are Melton textile material and Needle textile material, which are commercially available, and other felt-like materials. The colour of the textile material may be any colour. Preferably the textile material has the colour usually employed; i.e. white or yellow. The textile material may be applied in any way. Preferably it is applied in the usual way; i.e. by adhering two dumbbell shaped blanks which on their reverse sides are coated with an adhesive onto the surface of the elastomeric ball. The two dumbbell shaped blanks preferably have the same shape and the same size; together the size of these two blanks is about equal to the surface area of the ball. The adhering of the two pieces to the ball may be conducted by means of an adhesive. Any suitable adhesive may be used. The two blanks preferably are connected to each other preferably in a stichless way, e.g. by sticking the edges of the blanks to each other by means of an adhesive.

The invention is illustrated with the following example.

Example 1

A polyol mixture was made by combining and mixing 54 parts by weight (pbw) of POLYMEG® 2000 polyol (BO polyol from Lyondell), 36 pbw of Specflex™ NC 700 (grafted polyether polyol from The Dow Chemical Company), 3.5 pbw of 1,2-ethanediol, 0.7 pbw of Dabco EG (catalyst from Air Products), 0.02 pbw Fomrez® UL-1 (catalyst from Momentive), 0.5 pbw Dabco DC-193 (surfactant from Air Products) and 0.5 pbw of water.

This polyol mixture and Suprasec 2733 polyisocyanate ex Huntsman were fed into a mould via a mixing head at index 100. The mould was an aluminium mould consisting of 2 parts each having a hemisphere cavity. Both cavities were sprayed with external mould release agent, Acmosil 36-4536. When the 2 parts are closed they together form a spherical cavity having a diameter of 6.25 cm. The 2 parts are held together by means of clamping forces. The mould temperature was 70 °C. The amount of ingredients used was selected in such a way that the density of the ball would be 400 kg/m$^3$.

When the mixture had been given 10 minutes to react an elastomeric polyurethane foam was demoulded having a spherical form. The ball was subsequently cured in an oven at 80 °C for 12 hours and then under ambient conditions for 6 weeks.

Then 2 dumbbell shaped pieces (same shape and size) of felt (thickness 0.25 cm) were adhered (using adhesive) onto the surface of the ball. The surface of the 2 pieces together was the same as the surface of the ball. The felt and the adhesive both were materials traditionally used in making tennis balls.

Example 2

Example 1 was repeated but using 1) a prepolymer made from uretonimine-modified 4,4'-MDI and Daltorez P708, the prepolymer having an NCO value of 16 % by weight, instead of Suprasec 2733, 2) 90 parts by weight of Daltorez P720 instead of Polymeg 2000 and Specflex NC700 and 3) 6 parts by weight of 1,2-ethanediol. The index was 100. Daltorez P708 and P720 are polyester polyols obtainable from Huntsman; Daltorez is a trademark of Huntsman International LLC.

Example 3 (comparative)

Example 1 was repeated but using 54 pbw Daltocel F428 instead of Polymeg 2000. Daltocel F428 is a polyoxyethylene polyoxypropylene polyol having a nominal hydroxy functionality of 3, a molecular weight of 6000 and an oxyethylene content of about 15 % by weight (all tipped); Daltocel is a trademark of Huntsman International LLC and Daltocel F428 is obtainable from Huntsman.

Example 4 (comparative)

Using the same procedure as above, a polyol mixture was made by combining and mixing 84.05 parts by weight (pbw) Daltocel F428 (unsaturation level of more than 0.03 meq/g.), 14 pbw of 1,4-butanediol, 1pbw of Dabco 25S (catalyst from Air Products), 0.6 pbw of Jeffcat™ ZF-22 (catalyst from Huntsman) and 0.35 pbw of water.
This polyol mixture and Suprasec 2433 polyisocyanate ex Huntsman were reacted as in example 1.
Properties of the tennis balls 1 day after the adherence of the 2 pieces of felt were as follows:

| Example | | 1 | 2 | 3 | 4 |
|---|---|---|---|---|---|
| Density of the ball without felt, kg/m$^3$ | | 400 | 400 | 400 | 400 |
| Weight of the tennis ball, g | | 57 | 57 | 57 | 57 |
| Rebound, cm (measured as described before) | | 140 | 131 | 112 | 125 |
| CLD, cm (measured as described before) | forward | 0.54 | 0.70 | 1.27 | 1.0 |
| | return | 0.86 | 1.07 | 1.61 | 1.2 |

**Claims**

1.   Tennis ball which comprises an elastomeric polyurethane foam having a ball shape and a density of 250-800 kg/m$^3$, which foam is covered with a textile material and which foam has been prepared by reacting an aromatic polyisocyanate and a polyol having an average nominal functionality of 2-4 and an average molecular weight of 1000-8000 and comprising at least 30% by weight of a polyol having a level of unsaturation of at most 0.03 meq/g and using a blowing agent, wherein the polyol having a level of unsaturation of at most 0.03 meq/g is selected from polyester polyols, polyoxypropylene polyols, polyoxyethylene polyoxypropylene polyols, polyoxyethylene polyols, polyoxybutylene polyols, polyoxyalkylene polyols comprising oxybutylene groups together with oxyethylene and/or oxypropylene groups, polyoxyalkylene polyester polyols and mixtures of such polyols with the proviso that the use of a polyoxyethylene polyoxypropylene polyol having an oxyethylene content of 50-90 % by weight, calculated on the weight of the polyol, as the only polyol having a level of unsaturation of at most 0.03 meq/g is excluded.

2.   Tennis ball according to claim 1 wherein the polyol is selected from polyester polyols, polyoxybutylene polyols, polyoxyalkylene polyester polyols and mixtures of these polyols and mixtures of the aforementioned polyols with polyoxyethylene polyoxypropylene polyols having an oxyethylene content of 50-90 % by weight, calculated on the weight of the polyol, in a weight ratio of the aforementioned polyols:this polyoxyethylene polyoxypropylene polyol of 1:99 to 99:1.

3.   Process for preparing a tennis ball according to claims 1-2 comprising making a ball-shaped elastomeric polyurethane foam by putting an aromatic polyisocyanate, a polyol having an average nominal functionality of 2-4 and an average molecular weight of 1000-8000 and comprising at least 30 % by weight of a polyol having a level of unsaturation of at most 0.03 meq/g and a blowing agent into a ball-shaped mould and by allowing these ingredients to form the elastomeric polyurethane foam, removing the foam from the mould and covering the foam with a textile material, wherein the polyol having a level of unsaturation of at most 0.03 meq/g is selected from polyester polyols, polyoxypropylene polyols, polyoxyethylene polyoxypropylene polyols, polyoxyethylene polyols, polyoxybutylene polyols, polyoxyalkylene polyols comprising oxybutylene groups together with oxyethylene and/or oxypropylene groups, polyoxyalkylene polyester polyols and mixtures of such polyols with the proviso that the use of a polyoxyethylene polyoxypropylene polyol having an oxyethylene content of 50-90 % by weight, calculated on the weight of the polyol, as the only polyol having a level of unsaturation of at most 0.03 meq/g is excluded.

4.   Process according to claim 3 wherein the polyol is selected from polyester polyols, polyoxybutylene polyols, polyoxyalkylene polyester polyols and mixtures of these polyols and mixtures of the aforementioned polyols with polyoxyethylene polyoxypropylene polyols having an oxyethylene content of 50-90 % by weight, calculated on the weight of the polyol, in a weight ratio of the aforementioned polyols:this polyoxyethylene polyoxypropylene polyol of 1:99 to 99:1.

**Patentansprüche**

1. Tennisball, der einen elastomeren Polyurethanschaumstoff, der eine Ballform und eine Dichte von 250-800 kg/m³ hat, umfasst, wobei der Schaumstoff mit einem Textilmaterial überzogen ist und wobei der Schaumstoff durch Umsetzen eines aromatischen Polyisocyanats und eines Polyols, das eine durchschnittliche nominale Funktionalität von 2 bis 4 und ein durchschnittliches Molekulargewicht von 1000-8000 hat und wenigstens 30 Gew.-% eines Polyols, das einen Level der Ungesättigtheit von höchstens 0,03 meq/g hat, umfasst, und unter Verwendung eines Treibmittels hergestellt wurde, wobei das Polyol, das einen Level der Ungesättigtheit von höchstens 0,03 meq/g hat, aus Polyesterpolyolen, Polyoxypropylenpolyolen, Polyoxyethylen-polyoxypropylen-polyolen, Polyoxyethylen-polyolen, Polyoxybutylen-polyolen, Polyoxyalkylen-polyolen, die Oxybutylen-Gruppen zusammen mit Oxyethylen- und/oder Oxypropylen-Gruppen umfassen, Polyoxyalkylen-polyester-polyolen und Gemischen solcher Polyole ausgewählt ist, mit der Maßgabe, dass die Verwendung eines Polyoxyethylen-polyoxypropylen-polyols mit einem Oxyethylen-Gehalt von 50-90 Gew.-%, berechnet auf das Gewicht des Polyols, als das einzige Polyol, das einen Level der Ungesättigtheit von höchstens 0,03 meq/g hat, ausgeschlossen ist.

2. Tennisball gemäß Anspruch 1, wobei das Polyol aus Polyester-polyolen, Polyoxybutylen-polyolen, Polyoxyalkylen-polyester-polyolen und Gemischen dieser Polyole und Gemischen der vorstehend genannten Polyole mit Polyoxyethylen-polyoxypropylen-polyolen, die einen Oxyethylen-Gehalt von 50-90 Gew.-%, bezogen auf das Gewicht des Polyols, haben, in einem Gewichtsverhältnis der vorstehend genannten Polyole : dieses Polyoxyethylen-polyoxypropylen-polyols von 1:99 bis 99:1, ausgewählt ist.

3. Verfahren zur Herstellung eines Tennisballs gemäß den Ansprüchen 1-2, umfassend Herstellen eines ballförmigen elastomeren Polyurethanschaumstoffs, indem ein aromatisches Polyisocyanat, ein Polyol, das eine durchschnittliche nominale Funktionalität von 2-4 und ein durchschnittliches Molekulargewicht von 1000-8000 hat und das wenigstens 30 Gew.-% eines Polyols, das einen Level der Ungesättigtheit von höchstens 0,03 meq/g hat, und ein Treibmittel in eine ballförmige Form gegeben werden und man diese Ingredienzien einen elastomeren Polyurethanschaumstoff bilden lässt, der Schaumstoff aus der Form entfernt und der Schaumstoff mit einem Textilmaterial überzogen wird, wobei das Polyol, das einen Level der Ungesättigtheit von höchstens 0,03 meq/g hat, aus Polyester-polyolen, Polyoxypropylen-polyolen, Polyoxyethylen-polyoxypropylen-polyolen, Polyoxyethylen-polyolen, Polyoxybutylenpolyolen, Polyoxyalkylen-polyolen, die Oxybutylen-Gruppen zusammen mit Oxyethylen- und/oder Oxypropylen-Gruppen umfassen, Polyoxyalkylen-polyester-polyolen und Gemischen solcher Polyole ausgewählt wird, mit der Maßgabe, dass die Verwendung eines Polyoxyethylen-polyoxypropylen-polyols, das einen Oxyethylen-Gehalt von 50-90 Gew.-%, errechnet auf das Gewicht des Polyols, als das einzige Polyol, das einen Level der Ungesättigtheit von höchstens 0,03 meq/g hat, aufweist, ausgeschlossen ist.

4. Verfahren gemäß Anspruch 3, wobei das Polyol aus Polyester-polyolen, Polyoxybutylen-polyolen, Polyoxyalkylen-polyester-polyolen und Gemischen dieser Polyole und Gemischen der vorstehend genannten Polyole mit Polyoxyethylen-polyoxypropylen-polyolen, die einen Oxyethylen-Gehalt von 50-90 Gew.-%, berechnet auf das Gewicht des Polyols, haben in einem Gewichtsverhältnis der vorstehend genannten Polyole : dieses Polyoxyethylen-polyoxypropylen-polyols von 1:99 bis 99:1, ausgewählt wird.

**Revendications**

1. Balle de tennis qui comprend une mousse de polyuréthanne élastomère ayant une forme de balle et une masse volumique de 250 à 800 kg/m³, mousse qui est couverte d'une matière textile et mousse qui a été préparée en faisant réagir un polyisocyanate aromatique et un polyol ayant une fonctionnalité nominale moyenne de 2 à 4 et un poids moléculaire moyen de 1000 à 8000 et comprenant au moins 30 % en poids d'un polyol ayant un degré d'insaturation d'au plus 0,03 meq/g et en utilisant un agent porogène, dans laquelle le polyol ayant un degré d'insaturation d'au plus 0,3 meq/g est choisi entre des polyester-polyols, des polyoxypropylène-polyols, des polyoxyéthylène-polyoxypropylène-polyols, des polyoxyéthylène-polyols, des polyoxybutylène-polyols, des polyoxyalkylène-polyols comprenant des groupes oxybutylène conjointement avec des groupes oxyéthylène et/ou oxypropylène, des polyoxyalkylène-polyester-polyols et des mélanges de ces polyols, sous réserve que l'utilisation d'un polyoxyéthylène-polyoxypropylène-polyol ayant une teneur en oxyéthylène de 50 à 90 % en poids, calculée sur la base du poids du polyol, comme seul polyol ayant un degré d'insaturation d'au plus 0,03 meq/g soit exclue.

2. Balle de tennis suivant la revendication 1, dans laquelle le polyol est choisi entre des polyester-polyols, des polyoxybutylène-polyols, des polyoxyalkylène-polyester-polyols et des mélanges de ces polyols et des mélanges des polyols précités avec des polyoxyéthylène-polyoxypropylène-polyols ayant une teneur en oxyéthylène de 50 à 90 % en poids, calculée sur la base du poids du polyol, en un rapport pondéral des polyols précités:de ce polyoxyéthylène-polyoxypropylène-polyol de 1:99 à 99:1.

3. Procédé pour préparer une balle de tennis suivant les revendications 1 et 2, comprenant la préparation d'une mousse de polyuréthanne élastomère en forme de balle en plaçant un polyisocyanate aromatique, un polyol ayant une fonctionnalité nominale moyenne de 2 à 4 et un poids moléculaire moyen de 1000 à 8000 et comprenant au moins 30 % en poids d'un polyol ayant un degré d'insaturation d'au plus 0,03 meq/g et un agent porogène dans un moule en forme de balle et en laissant ces ingrédients former la mousse de polyuréthanne élastomère, en évacuant la mousse du moule et en couvrant la mousse d'une matière textile, dans laquelle le polyol ayant un degré d'insaturation d'au plus 0,03 meq/g est sélectionné entre des polyester-polyols, des polyoxypropylène-polyols, des polyoxyéthylène-polyoxypropylène-polyols, des polyoxyéthylène-polyols, des polyoxybutylène-polyols, des polyoxyalkylène-polyols comprenant des groupes oxybutylène conjointement avec des groupes oxyéthylène et/ou oxypropylène, des polyoxyalkylène-polyester-polyols et des mélanges de ces polyols, sous réserve que l'utilisation d'un polyoxyéthylène-polyoxypropylène-polyol ayant une teneur en oxyéthylène de 50 à 90 % en poids, calculée sur la base du poids du polyol, comme seul polyol ayant un degré d'insaturation d'au plus 0,03 meq/g soit exclue.

4. Procédé suivant la revendication 3, dans lequel le polyol est choisi entre des polyester-polyols, des polyoxybutylène-polyols, des polyoxyalkylène-polyester-polyols et des mélanges de ces polyols et des mélanges des polyols précités avec des polyoxyéthylène-polyoxypropylène-polyols ayant une teneur en oxyéthylène de 50 à 90 % en poids, calculée sur la base du poids du polyol, en un rapport pondéral des polyols précités:de ce polyoxyéthylène-polyoxypropylène-polyol de 1:99 à 99:1.

**EP 2 214 793 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5413331 A
- US 2005014854 A
- EP 1148085 A
- KR 2001002975
- EP 10645 A
- GB 2008954 A
- NL 9201353
- DE 3131705
- GB 2001538 A
- GB 910701 A
- EP 1344555 A
- DE 2911430
- WO 0341813 A
- WO 2009013617 A
- WO 2008000590 A

**Non-patent literature cited in the description**

- **G. Woods.** The ICI Polyurethanes Book. 1990, 32-35